# EUROPEAN PATENT APPLICATION

(11) **EP 4 675 131 A1**
(43) Date of publication of application: **07.01.2026**
(21) Application number: 24763821.6
(22) Date of filing: 26.02.2024
(51) Int. Cl.: F16H 57/04, B63H 5/10, B63H 23/34, B63H 23/36, F16N 7/38, F16N 11/08

(54) **OIL SUPPLY DEVICE FOR MARINE CONTRA-ROTATING PROPELLER DEVICE, AND MARINE CONTRA-ROTATING PROPELLER DEVICE**

(30) Priority: 27.02.2023 JP 2023028059
(71) Applicant: Nihon Shipyard Co., Ltd., Tokyo 100-0006 (JP); Imabari Shipbuilding Co., Ltd., Ehime 799-2195 (JP); Japan Marine United Corporation, Yokohama-City, Kanagawa 220-0012 (JP)
(72) Inventor: SHIMIZU, Masahiro, Tokyo 100-0006 (JP)
(74) Representative: Maiwald GmbH
(86) International application number: PCT/JP2024/006742
(87) International publication number: WO 2024/181341

(57) **Abstract**

Provided are: an oil supply device for a marine contra-rotating propeller device capable of supplying lubricating oil to a contra-rotating bearing with a simple structure, reducing manufacturing costs, and suppressing the scattering of the lubricating oil; and a marine contra-rotating propeller device. A marine contra-rotating propeller device 1 includes an inner propeller shaft 2, the inner propeller shaft 2 includes a hollow portion 23 formed in an axial direction from a front end to a position adjacent to a gap 11 formed by a front contra-rotating seal device 51 and a front contra-rotating bearing 41, and a plurality of oil supply ports 24 formed to allow communication between the gap 11 and the hollow portion 23, and lubricating oil is supplied to a bearing system including a contra-rotating bearing 4 via the hollow portion 23 and the plurality of oil supply ports 24.

## Description

### Technical Field

The present invention relates to an oil supply device for a marine contra-rotating propeller device and a marine contra-rotating propeller device, and particularly, to an oil supply device for a marine contra-rotating propeller device suitable for supplying lubricating oil to a bearing system of a marine contra-rotating propeller device and the marine contra-rotating propeller device.

### Background Art

A marine contra-rotating propeller device is a device that rotates two propellers (front propeller and rear propeller) mounted concentrically in opposite directions. This device can recover the rotating flow's energy lost in the front propeller by the rear propeller to convert the energy into propulsion power, and can improve the propulsion performance.

For example, as described in Patent Literatures 1 and 2, a marine contra-rotating propeller device includes an inner propeller shaft including a rear propeller, an outer propeller shaft including a front propeller, a pair of contra-rotating bearings (front contra-rotating bearing and rear contra-rotating bearing) arranged between the inner propeller shaft and the outer propeller shaft, a contra-rotating gear device that reverses the inner propeller shaft and the outer propeller shaft, a stern tube bearing arranged between a stern tube and the outer propeller shaft, a pair of stern tube seal devices (front stern tube seal and rear stern tube seal) arranged at both ends of the stern tube, and a pair of contra-rotating seal devices (front contra-rotating seal device and rear contra-rotating seal device) arranged between the inner propeller shaft and the outer propeller shaft.

### Citation List

### Patent Literatures

Patent Literature 1: Japanese Patent No. 5033664
Patent Literature 2: Japanese Patent No. 6532927

### Summary of Invention

### Technical Problem

In the above-described marine contra-rotating propeller device, it is necessary to supply lubricating oil in order to prevent wear and seizure of the contra-rotating bearing, and the problem is how to supply lubricating oil to a rotating system including the inner propeller shaft and the outer propeller shaft from an external stationary system.

For example, in the above-described marine contra-rotating propeller device described in Patent Literatures 1 and 2, lubricating oil is supplied from a housing (stationary system) of the front stern tube seal device, and the lubricating oil is taken out from a seal liner (rotating system) of the front stern tube seal device, and then supplied to the contra-rotating bearing.

However, in a case where lubricating oil is supplied to the contra-rotating bearing via the stern tube seal device, there are restrictions such as the need for processing of the oil supply system for the seal liner and the need for the oil supply pipe connecting the stern tube seal device and the outer propeller shaft, leading to problems such as a complicated structure and an increase in manufacturing costs.

In addition, since the oil supply pipe connecting the stern tube seal device and the outer propeller shaft is included in the rotating system, there is also a problem that when the lubricating oil leaks from a pipe connection portion or the like, the leaking lubricating oil scatters to the surroundings as the outer propeller shaft rotates.

The present invention has been made in view of such problems, and an object of the present invention is to provide an oil supply device for a marine contra-rotating propeller device capable of supplying lubricating oil to a contra-rotating bearing with a simple structure, reducing manufacturing costs, and suppressing the scattering of the lubricating oil, and a marine contra-rotating propeller device.

### Solution to Problem

According to the present invention, there is provided an oil supply device for a marine contra-rotating propeller device including: an inner propeller shaft including a rear propeller; an outer propeller shaft including a front propeller; a contra-rotating bearing arranged between the inner propeller shaft and the outer propeller shaft; and a contra-rotating seal device arranged between the inner propeller shaft and the outer propeller shaft, in which the contra-rotating bearing includes a front contra-rotating bearing arranged on a bow side and a rear contra-rotating bearing arranged on a stern side, the contra-rotating seal device includes a front contra-rotating seal device arranged closer to a bow side than the front contra-rotating bearing and a rear contra-rotating seal device arranged closer to a stern side than the rear contra-rotating bearing, the inner propeller shaft includes a hollow portion formed in an axial direction from a front end to a position adjacent to a gap formed by the front contra-rotating seal device and the front contra-rotating bearing, and a plurality of oil supply ports formed to allow communication between the gap and the hollow portion, and lubricating oil is supplied to a bearing system including the contra-rotating bearing via the hollow portion and the plurality of oil supply ports.

The marine contra-rotating propeller device may include a shaft member connected concentrically to the inner propeller shaft, the shaft member may include a communication channel communicating with the hollow portion, and the oil supply device may supply the lubricating oil to the hollow portion via the communication channel.

The marine contra-rotating propeller device may include a contra-rotating gear device that reverses the inner propeller shaft and the outer propeller shaft and a drive device that outputs power to the contra-rotating gear device, the contra-rotating gear device may include an inner rotor shaft that drives the inner propeller shaft and an outer rotor shaft that drives the outer propeller shaft, the drive device may include an output shaft arranged in parallel with the inner rotor shaft, the inner rotor shaft may include a communication channel communicating with the hollow portion, and the oil supply device may supply the lubricating oil to the hollow portion via the communication channel.

The marine contra-rotating propeller device may include a contra-rotating gear device that reverses the inner propeller shaft and the outer propeller shaft and a drive device that outputs power to the contra-rotating gear device, the contra-rotating gear device may include an inner rotor shaft that drives the inner propeller shaft and an outer rotor shaft that drives the outer propeller shaft, the drive device may include an output shaft arranged concentrically with the inner rotor shaft, the inner rotor shaft may include a first communication channel communicating with the hollow portion, the output shaft may include a second communication channel communicating with the first communication channel, and the oil supply device may supply the lubricating oil from the second communication channel to the hollow portion through the first communication channel.

The plurality of oil supply ports may be formed at equal intervals in a circumferential direction of the inner propeller shaft.

The oil supply device may include an oil supply joint that supplies the lubricating oil from a stationary system to a rotating system.

In addition, according to the present invention, there is provided a marine contra-rotating propeller device including: the oil supply device for a marine contra-rotating propeller device having any of the configurations described above.

### Advantageous Effects of Invention

According to the oil supply device for a marine contra-rotating propeller device and the marine contra-rotating propeller device according to the present invention described above, since the lubricating oil of the bearing system is supplied from the end portion side of the inner propeller shaft, the rotating oil supply pipe can be eliminated, the lubricating oil can be supplied to the contra-rotating bearing with a simple structure, manufacturing costs can be reduced, and the scattering of the lubricating oil can be suppressed.

### Brief Description of Drawings

Fig. 1 is a schematic configuration diagram showing an oil supply device for a marine contra-rotating propeller device according to a first embodiment.
Fig. 2 shows cross-sectional views of an inner propeller shaft, showing an example of oil supply ports of the oil supply device shown in Fig. 1. (A) shows a first example and (B) shows a second example.
Fig. 3 is a schematic configuration diagram showing an oil supply device for a marine contra-rotating propeller device according to a second embodiment.

### Description of Embodiments

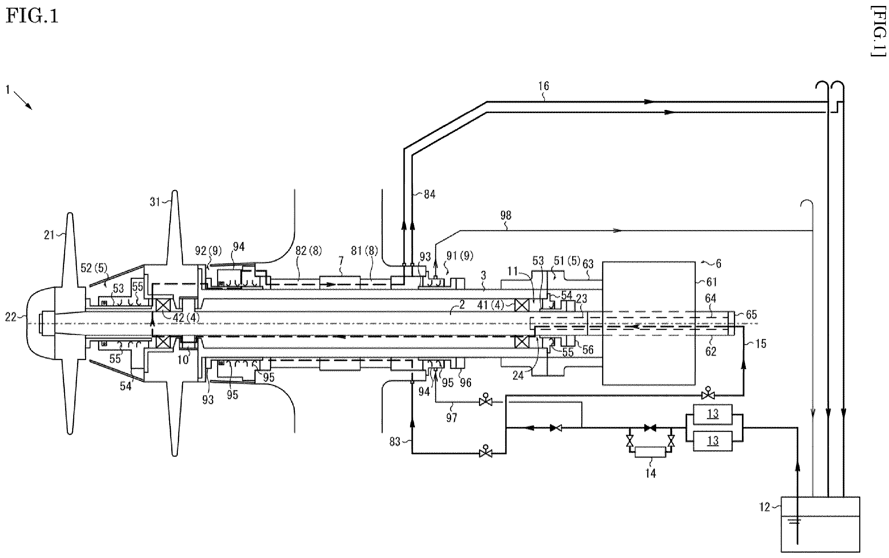

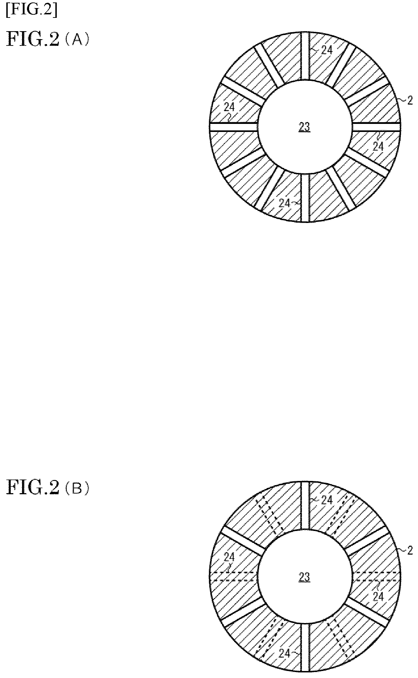

Hereinafter, embodiments of the present invention will be described with reference to Figs. 1 to 3. Here, Fig. 1 is a schematic configuration diagram showing an oil supply device for a marine contra-rotating propeller device according to a first embodiment. Fig. 2 shows cross-sectional views of an inner propeller shaft, showing an example of oil supply ports of the oil supply device shown in Fig. 1. (A) shows a first example and (B) shows a second example. In Fig. 1, hatching of a cross-sectional portion is omitted for the sake of explanatory convenience.

In the present specification, the term "front" means a position or a state relatively toward the bow side, and the term "rear" means a position or a state relatively toward the stern side. In addition, the term "inner" means a position or a state relatively radially inward, and the term "rear" means a position or a state relatively radially outward.

For example, as shown in Fig. 1, a marine contra-rotating propeller device 1 includes an inner propeller shaft 2 including a rear propeller 21, an outer propeller shaft 3 including a front propeller 31, a contra-rotating bearing 4 arranged between the inner propeller shaft 2 and the outer propeller shaft 3, a contra-rotating seal device 5 arranged between the inner propeller shaft 2 and the outer propeller shaft 3, a contra-rotating gear device 6 that reverses the inner propeller shaft 2 and the outer propeller shaft 3, a drive device (not shown) that outputs power to the contra-rotating gear device 6, a stern tube bearing 8 arranged between a stern tube 7 and the outer propeller shaft, and a pair of stern tube seal devices 9 arranged at both ends of the stern tube 7.

The contra-rotating gear device 6 includes, for example, a gear box 61 with a built-in gear mechanism constituting a contra-rotating mechanism, an inner rotor shaft 62 that drives the inner propeller shaft 2, and an outer rotor shaft 63 that drives the outer propeller shaft 3. An intermediate shaft may be interposed between the inner propeller shaft 2 and the inner rotor shaft 62 or between the outer propeller 3 and the outer rotor shaft 63.

The drive device includes, for example, an output shaft arranged in parallel with the inner rotor shaft 62. The drive device includes, for example, a first drive device that outputs power to the inner rotor shaft 62 and a second drive device that outputs power to the outer rotor shaft 63, and the inner rotor shaft 62 and the outer rotor shaft 63 are rotationally driven in opposite directions by the built-in gear mechanism of the gear box 61.

The marine contra-rotating propeller device 1 shown in Fig. 1 adopts a so-called parallel gear mechanism as the gear mechanism constituting the contra-rotating mechanism. Note that specific configurations of the contra-rotating gear device 6 adopting such a parallel gear mechanism and the drive device are already disclosed in, for example, Patent Literatures 1 and 2 described above, and thus detailed description and drawings are omitted here.

The inner propeller shaft 2 is a propeller shaft arranged concentrically inside the outer propeller shaft 3, and at its rear end, the rear propeller 21 is arranged. A propeller cap 22 is arranged at a rear end of the rear propeller 21.

The outer propeller shaft 3 is a propeller shaft arranged concentrically outside the inner propeller shaft 2, and at its rear end, the front propeller 31 is arranged. Each of the outer propeller shaft 3 and the front propeller 31 has a cavity penetrating an axial center portion, and the inner propeller shaft 2 is inserted into the cavity.

The outer propeller shaft 3 is formed of a shaft portion and a propeller portion. Unless otherwise specified, the notation "outer propeller shaft" means a substantially cylindrical portion arranged outside the inner propeller shaft 2 in a state in which the front propeller 31 is connected. That is, the outer propeller shaft 3 includes a boss portion of the front propeller 31.

The thrust load generated by the front propeller 31 is supported by a thrust bearing 10 arranged between the inner propeller shaft 2 and the outer propeller shaft 3. For example, the thrust bearing 10 is arranged on an opposed surface perpendicular to the shaft portion formed by inserting a protruding portion formed at an intermediate portion of the inner propeller shaft 2 into a recessed portion (boundary portion between the shaft portion and the propeller portion) formed in the outer propeller shaft 3.

The contra-rotating bearing 4 is a bearing that supports a radial load of the inner propeller shaft 2, and is arranged at both end portions in an axial direction of the inner propeller shaft 2, for example. The contra-rotating bearing 4 arranged near the end portion on the bow side is referred to as a front contra-rotating bearing 41, and the contra-rotating bearing 4 arranged near the end portion on the stern side is referred to as a rear contra-rotating bearing 42. The rear contra-rotating bearing 42 is arranged immediately behind the thrust bearing 10, for example. The contra-rotating bearing 4 is a rolling bearing, for example.

The contra-rotating seal device 5 is a seal device that seals a gap between the inner propeller shaft 2 and the outer propeller shaft 3, and is arranged at both end portions of the outer propeller shaft 3. The contra-rotating seal device 5 arranged near the end portion on the bow side is referred to as a front contra-rotating seal device 51, and the contra-rotating seal device 5 arranged near the end portion on the stern side is referred to as a rear contra-rotating seal device 52.

The contra-rotating seal device 5 includes, for example, a seal liner 53 arranged on a peripheral surface of the inner propeller shaft 2, a seal casing 54 arranged on a surface of the seal liner 53, and a seal ring 55 arranged in the seal casing 54 while being pressed against the seal liner 53. The configuration of the contra-rotating seal device 5 is not limited to the configuration shown in the drawing.

The seal liner 53 of the front contra-rotating seal device 51 is positioned in the axial direction by a clamp ring 56. The seal liner 53 of the rear contra-rotating seal device 52 is positioned in the axial direction by a boss portion of the rear propeller 21.

In the rear contra-rotating seal device 52, seal air is supplied between the seal rings 55 on the rear side. The seal air supply system is already disclosed in, for example, Patent Literatures 1 and 2 described above, and thus detailed description and drawings are omitted here.

The stern tube bearing 8 is a bearing that supports the radial load of the outer propeller shaft 3, and is arranged near both end portions of the stern tube 7, for example. The stern tube bearing 8 arranged near the end portion on the bow side is referred to as a front stern tube bearing 81, and the stern tube bearing 8 arranged near the end portion on the stern side is referred to as a rear stern tube bearing 82.

Lubricating oil is supplied from an oil supply line 83 to the stern tube bearing 8. Specifically, lubricating oil flows into a space on the stern side of the rear stern tube bearing 82 through the pipe in the stern tube 7 and is supplied to the rear stern tube bearing 82. The lubricating oil that has passed through the rear stern tube bearing 82 is supplied to the front stern tube bearing 81 through the stern tube 7 and discharged from a recovery line 84.

The stern tube seal device 9 is a seal device that seals a gap between the stern tube 7 and the outer propeller shaft 3, and is arranged at both ends of the stern tube 7. The stern tube seal device 9 arranged near the end portion on the bow side is referred to as a front stern tube seal device 91, and the stern tube seal device 9 arranged near the end portion on the stern side is referred to as a rear stern tube seal device 92.

The stern tube seal device 9 includes, for example, a seal liner 93 arranged on a peripheral surface of the outer propeller shaft 3, a seal casing 94 arranged on a surface of the seal liner 93, and a seal ring 95 arranged in the seal casing 94 while being pressed against the seal liner 93. The configuration of the stern tube seal device 9 is not limited to the configuration shown in the drawing.

The seal liner 93 of the front stern tube seal device 91 is positioned in the axial direction by a clamp ring 96. In addition, the seal liner 93 of the rear stern tube seal device 92 is positioned in the axial direction by a boss portion of the front propeller 31.

In addition, the stern tube seal device 9 is, for example, an oil-lubricated seal device. Lubricating oil is supplied from an oil supply line 97 to the front stern tube seal device 91 and discharged from a recovery line 98. The seal ring 95 on the bow side of the rear stern tube seal device 92 is lubricated and cooled by the lubricating oil of the stern tube bearing 8 supplied to the space on the stern side of the rear stern tube bearing 82.

In the rear stern tube seal device 92, seal air is supplied between the seal rings 95 on the rear side. The seal air supply system is already disclosed in, for example, Patent Literatures 1 and 2 described above, and thus detailed description and drawings are omitted here.

The contra-rotating bearing 4 and the thrust bearing 10 described above constitute the bearing system of the marine contra-rotating propeller device 1, and it is necessary to supply lubricating oil to the bearing system. The oil supply device according to the present embodiment is characterized by the structure that supplies lubricating oil to the bearing system.

Specifically, the inner propeller shaft 2 includes a hollow portion 23 formed in the axial direction from the front end to a position adjacent to a gap 11 formed by the front contra-rotating seal device 51 and the front contra-rotating bearing 41, and a plurality of oil supply ports 24 formed to allow communication between the gap 11 and the hollow portion 23 to supply lubricating oil to the bearing system via the hollow portion 23 and the plurality of oil supply ports 24.

The hollow portion 23 is a partial cavity formed in an axial center portion of the inner propeller shaft 2. The depth in the axial direction of the hollow portion 23 is set at a position adjacent to the gap 11 so that the oil supply port 24 can be arranged. The hollow portion 23 may be formed up to a position (that is, a position beyond the front end of the front contra-rotating bearing 41) adjacent to the front contra-rotating bearing 41. Although it is not necessary to form the hollow portion 23 up to a position (that is, a position beyond the rear end of the front contra-rotating bearing 41) beyond the front contra-rotating bearing 41, such a case is not excluded.

For example, as shown in Fig. 2(A), the plurality of oil supply ports 24 are radially formed at equal intervals in the circumferential direction of the inner propeller shaft 2. Here, twelve oil supply ports 24 are shown in the drawing, but the number of the oil supply ports is not limited to such a number. In addition, the oil supply port 24 may be formed so that a diameter on the gap 11 side (outer side) is larger than a diameter on the hollow portion 23 side (inner side).

In addition, as shown in Fig. 2(B), the plurality of oil supply ports 24 may be formed at different positions in the axial direction of the hollow portion 23. Here, six oil supply ports 24 are radially arranged at equal intervals on the front side, six oil supply ports 24 are radially arranged at equal intervals on the rear side, and the phases of the front and rear oil supply ports 24 are shifted so that twelve oil supply ports 24 are evenly distributed in the circumferential direction. In Fig. 2(B), the oil supply ports 24 arranged on the front side are indicated by the solid lines, and the oil supply ports 24 arranged on the rear side are indicated by the dotted lines.

The arrangement of the oil supply ports 24 is not limited to those shown in the drawings. The number of distribution stages to the front and rear sides may be increased, the diameters of the oil supply ports 24 may be different between the front side and the rear side, or the number of the oil supply ports 24 may be different between the front side and the rear side.

In addition, as shown in Fig. 1, in the marine contra-rotating propeller device 1 adopting the parallel gear mechanism, the inner rotor shaft 62 of the contra-rotating gear device 6 is connected to the front end of the inner propeller shaft 2. Therefore, in the present embodiment, lubricating oil is supplied to the hollow portion 23 via the inner rotor shaft 62. Specifically, a communication channel 64 communicating with the hollow portion 23 of the inner propeller shaft 2 is formed in the inner rotor shaft 62, and lubricating oil is supplied to the hollow portion 23 via the communication channel 64.

The communication channel 64 is, for example, a cavity penetrating an axial center portion of the inner rotor shaft 62. The communication channel 64 is preferably arranged concentrically with the hollow portion 23 and has substantially the same diameter as the hollow portion 23. An oil supply joint 65 that supplies lubricating oil from the stationary system to the rotating system is arranged at a front end of the communication channel 64. The oil supply joint 65 is, for example, a rotary joint, but is not limited thereto.

In addition, the oil supply joint 65 may be an oil supply seal arranged on a peripheral surface of the inner rotor shaft 62. In this case, the communication channel 64 does not need to penetrate the inner rotor shaft 62, but needs to have a plurality of oil supply ports, supplying lubricating oil from the oil supply joint 65 to the communication channel 64, on its circumference.

The lubricating oil supply system includes, for example, an oil tank 12 that stores lubricating oil, a pump 13 that feeds lubricating oil, a cooler 14 that cools lubricating oil, an oil supply line 15 connected to the oil supply joint 65, and a recovery line 16 that discharges lubricating oil from the stern tube 7 and recovers the lubricating oil in the oil tank 12.

Therefore, the lubricating oil is supplied from the oil tank 12 to the communication channel 64 of the inner rotor shaft 62 through the oil supply line 15. The lubricating oil supplied to the communication channel 64 is supplied to the hollow portion 23 of the inner propeller shaft 2. The lubricating oil supplied to the hollow portion 23 is supplied from the oil supply port 24 to the gap 11 formed by the front contra-rotating seal device 51 and the front contra-rotating bearing 41, and is supplied to the front contra-rotating seal device 51 and the front contra-rotating bearing 41.

The lubricating oil that has passed through the front contra-rotating bearing 41 is supplied to the thrust bearing 10 via a first inter-shaft space 17 formed between the inner propeller shaft 2 and the outer propeller shaft 3. The lubricating oil that has passed through the thrust bearing 10 is supplied to the rear contra-rotating bearing 42 arranged immediately after the thrust bearing.

The lubricating oil that has passed through the rear contra-rotating bearing 42 passes through the channel formed in the front propeller 31 and the rear stern tube seal device 92, passes through an oil discharge line installed in the stern tube 7, and is then discharged to the recovery line 16.

In addition, as shown in the drawing, the oil supply line 83 of the stern tube bearing 8 and the oil supply line 97 of the front stern tube seal device 91 may be branched from the oil supply line 15. A gate valve or a flow rate regulating valve is arranged as necessary in the oil supply lines 15, 83, and 97. In addition, the recovery line 84 of the stern tube bearing 8 and the recovery line 98 of the front stern tube seal device 91 may be connected to the oil tank 12 to recover the lubricating oil. The oil tank 12 that supplies and recovers the lubricating oil, the pump 13 that feeds the lubricating oil, and the cooler 14 that cools the lubricating oil may be integrated into one common unit or may be individually installed.

In addition, the drain discharged from the contra-rotating bearing 4 and the contra-rotating seal device 5 is recovered by a drain recovery device (not shown). The drain recovery system is already disclosed in, for example, Patent Literatures 1 and 2 described above, and thus detailed description and drawings are omitted here.

According to the marine contra-rotating propeller device 1 including the oil supply device according to the present embodiment described above, since the lubricating oil of the bearing system is supplied from the end portion side of the inner propeller shaft 2, the rotating oil supply pipe can be eliminated, the lubricating oil can be supplied to the contra-rotating bearing 4 with a simple structure, manufacturing costs can be reduced, and the scattering of the lubricating oil can be suppressed.

In addition, in a case where lubricating oil is supplied to the contra-rotating bearing via the stern tube seal device as in the marine contra-rotating propeller device of the related art, special processing of the oil supply system is needed for the seal liner, and thus the stern tube seal device or the like needs to be custom-made.

On the other hand, in the marine contra-rotating propeller device 1 including the oil supply device according to the present embodiment described above, since the oil supply pipe connecting the stern tube seal device 9 and the contra-rotating bearing 4 is eliminated, a general-purpose product can be applied to the stern tube seal device 9.

In addition, in the marine contra-rotating propeller device of the related art, when the seal liner is worn, it is necessary to perform an operation of pulling out the seal liner from the shaft in order to re-polish the outer periphery and this involves many additional operations, such as removing the oil supply pipe, which increase the time and cost of maintenance.

In addition, there is also a maintenance method of forming a new sliding surface by shifting the mounting position of the seal liner in the axial direction when the seal liner is worn. In this case, it is necessary to form the seal liner long in advance, which causes an increase in manufacturing costs. In addition, since the length of the oil supply pipe and the position of the oil supply port are changed depending on the mounting position of the seal liner, it is necessary to re-manufacture the oil supply pipe and the oil supply port.

On the other hand, in the marine contra-rotating propeller device 1 including the oil supply device according to the present embodiment described above, a general-purpose product can be applied to the stern tube seal device 9, the maintenance method of forming a new sliding surface by shifting the mounting position of the seal liner 93 when the seal liner 93 is worn can be easily adopted, and it is not necessary to perform the operation of pulling out the seal liner 93 from the shaft in order to re-polish the outer periphery when the seal liner 93 is worn.

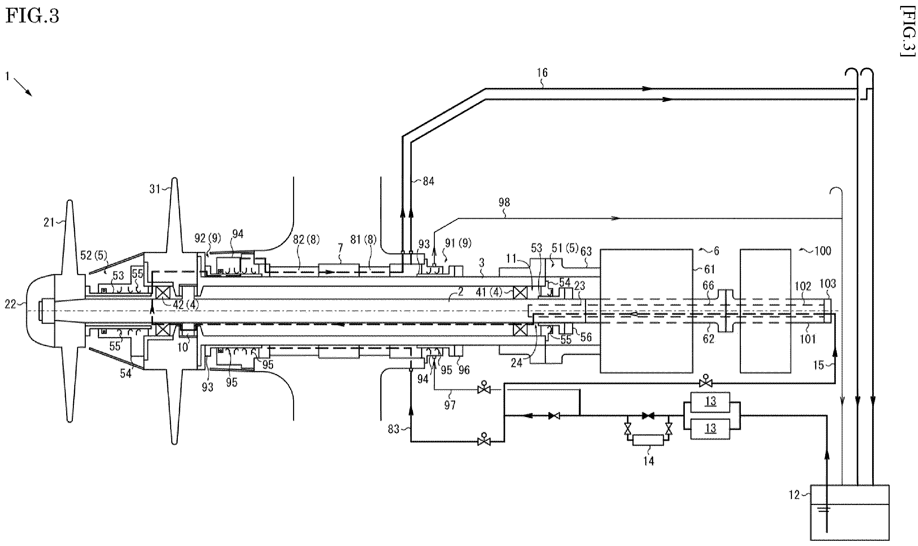

Next, a marine contra-rotating propeller device 1 according to a second embodiment of the present invention will be described with reference to Fig. 3. Here, Fig. 3 is a schematic configuration diagram showing an oil supply device for a marine contra-rotating propeller device according to the second embodiment. The same components as those of the first embodiment described above are denoted by the same reference numerals, and redundant description will be omitted.

The marine contra-rotating propeller device 1 shown in Fig. 3 adopts a so-called planetary gear mechanism as the gear mechanism constituting the contra-rotating mechanism. Since the contra-rotating mechanism adopting the planetary gear mechanism is a known technique, detailed description thereof will be omitted here.

As in the first embodiment, the marine contra-rotating propeller device 1 according to the second embodiment includes a contra-rotating gear device 6 that reverses an inner propeller shaft 2 and an outer propeller shaft 3 and a drive device 100 that outputs power to the contra-rotating gear device 6. The contra-rotating gear device 6 includes an inner rotor shaft 62 that drives the inner propeller shaft 2 and an outer rotor shaft 63 that drives the outer propeller shaft.

The drive device 100 includes an output shaft 101 arranged concentrically with the inner rotor shaft 62. The inner rotor shaft 62 includes a first communication channel 66 communicating with a hollow portion 23 of the inner propeller shaft 2, and the output shaft 101 includes a second communication channel 102 communicating with the first communication channel 66. An oil supply joint 103 is arranged at a front end of the second communication channel 102.

The first communication channel 66 is a cavity penetrating an axial center portion of the inner rotor shaft 62. The second communication channel 102 is, for example, a cavity penetrating an axial center portion of the output shaft 101. The oil supply joint 103 is, for example, a rotary joint, but is not limited thereto.

The lubricating oil of the bearing system is supplied from an oil tank 12 to the second communication channel 102 of the output shaft 101 through an oil supply line 15. The lubricating oil supplied to the second communication channel 102 is supplied to the first communication channel 66 of the inner rotor shaft 62, and the lubricating oil supplied to the first communication channel 66 is supplied to the hollow portion 23 of the inner propeller shaft 2.

The lubricating oil supplied to the hollow portion 23 is supplied from the oil supply port 24 to the gap 11 formed by the front contra-rotating seal device 51 and the front contra-rotating bearing 41, and is supplied to the front contra-rotating seal device 51 and the front contra-rotating bearing 41. The subsequent flow of the lubricating oil is similar to that in the oil supply device according to the first embodiment described above.

As described above, the oil supply device for the marine contra-rotating propeller device 1 according to the present embodiment can be appropriately adapted depending on the configuration of the drive device. In addition, even in a case where an intermediate shaft connecting the shaft systems is provided between the inner propeller shaft 2 and the inner rotor shaft 62 or between the inner rotor shaft 62 and the output shaft 101, by forming a communication channel communicating with the hollow portion 23 in the intermediate shaft, the lubricating oil of the bearing system can be supplied to the hollow portion 23 via the communication channel.

That is, in a case where one or more shaft members are provided concentrically with the inner propeller shaft 2, the lubricating oil can be supplied to the bearing system of the marine contra-rotating propeller device 1 by forming a communication channel communicating with the hollow portion 23 of the inner propeller shaft 2 in the shaft member and by arranging an oil supply joint in the foremost shaft member.

The present invention is not limited to the above-described embodiments, and various changes can be made without departing from the gist of the present invention.

### Reference Signs List

- 1: Marine contra-rotating propeller device
- 2: Inner propeller shaft
- 3: Outer propeller shaft
- 4: Contra-rotating bearing
- 5: Contra-rotating seal device
- 6: Contra-rotating gear device
- 7: Stern tube
- 8: Stern tube bearing
- 9: Stern tube seal device
- 10: Thrust bearing
- 11: Gap
- 12: Oil tank
- 13: Pump
- 14: Cooler
- 15, 83, 97: Oil supply line
- 16, 84, 98: Recovery line
- 17: First inter-shaft space
- 18: Second inter-shaft space
- 21: Rear propeller
- 22: Propeller cap
- 23: Hollow portion
- 24: Oil supply port
- 31: Front propeller
- 41: Front contra-rotating bearing
- 42: Rear contra-rotating bearing
- 51: Front contra-rotating seal device
- 52: Rear contra-rotating seal device
- 53, 93: Seal liner
- 54, 94: Seal casing
- 55, 95: Seal ring
- 56, 96: Clamp ring
- 61: Gear box
- 62: Inner rotor shaft
- 63: Outer rotor shaft
- 64: Communication channel
- 65: Oil supply joint
- 66: First communication channel
- 81: Front stern tube bearing
- 82: Rear stern tube bearing
- 91: Front stern tube seal device
- 92: Rear stern tube seal device
- 100: Drive device
- 101: Output shaft
- 102: Second communication channel
- 103: Oil supply joint

## Claims

1. An oil supply device for a marine contra-rotating propeller device comprising: an inner propeller shaft including a rear propeller; an outer propeller shaft including a front propeller; a contra-rotating bearing arranged between the inner propeller shaft and the outer propeller shaft; and a contra-rotating seal device arranged between the inner propeller shaft and the outer propeller shaft,
wherein the contra-rotating bearing includes a front contra-rotating bearing arranged on a bow side and a rear contra-rotating bearing arranged on a stern side,
the contra-rotating seal device includes a front contra-rotating seal device arranged closer to a bow side than the front contra-rotating bearing and a rear contra-rotating seal device arranged closer to a stern side than the rear contra-rotating bearing,
the inner propeller shaft includes a hollow portion formed in an axial direction from a front end to a position adjacent to a gap formed by the front contra-rotating seal device and the front contra-rotating bearing, and a plurality of oil supply ports formed to allow communication between the gap and the hollow portion; and
lubricating oil is supplied to a bearing system including the contra-rotating bearing via the hollow portion and the plurality of oil supply ports.

2. The oil supply device for a marine contra-rotating propeller device according to claim 1, wherein the marine contra-rotating propeller device includes a shaft member connected concentrically to the inner propeller shaft, the shaft member includes a communication channel communicating with the hollow portion, and the lubricating oil is supplied to the hollow portion via the communication channel.

3. The oil supply device for a marine contra-rotating propeller device according to claim 1, wherein the marine contra-rotating propeller device includes a contra-rotating gear device that reverses the inner propeller shaft and the outer propeller shaft and a drive device that outputs power to the contra-rotating gear device, the contra-rotating gear device includes an inner rotor shaft that drives the inner propeller shaft and an outer rotor shaft that drives the outer propeller shaft, the drive device includes an output shaft arranged in parallel with the inner rotor shaft, the inner rotor shaft includes a communication channel communicating with the hollow portion, and the lubricating oil is supplied to the hollow portion via the communication channel.

4. The oil supply device for a marine contra-rotating propeller device according to claim 1, wherein the marine contra-rotating propeller device includes a contra-rotating gear device that reverses the inner propeller shaft and the outer propeller shaft and a drive device that outputs power to the contra-rotating gear device, the contra-rotating gear device includes an inner rotor shaft that drives the inner propeller shaft and an outer rotor shaft that drives the outer propeller shaft, the drive device includes an output shaft arranged concentrically with the inner rotor shaft, the inner rotor shaft includes a first communication channel communicating with the hollow portion, the output shaft includes a second communication channel communicating with the first communication channel, and the lubricating oil is supplied from the second communication channel to the hollow portion through the first communication channel.

5. The oil supply device for a marine contra-rotating propeller device according to claim 1, wherein the plurality of oil supply ports are formed at equal intervals in a circumferential direction of the inner propeller shaft.

6. The oil supply device for a marine contra-rotating propeller device according to claim 1, further comprising an oil supply joint that supplies the lubricating oil from a stationary system to a rotating system.

7. A marine contra-rotating propeller device comprising: the oil supply device for a marine contra-rotating propeller device according to any one of claims 1 to 6.
